# EUROPÄISCHE PATENTSCHRIFT

(11) **EP 2 112 293 B1**
(45) Veröffentlichungstag und Bekanntmachung des Hinweises auf die Patenterteilung: **18.02.2015**
(21) Anmeldenummer: 08007769.6
(22) Anmeldetag: 22.04.2008
(51) Int. Cl.: B32B 7/02, B32B 21/02, B32B 21/10, E04C 2/16, E04B 1/76

(54) **Holzfaserdämmplatte**
Wood fibre insulating board
Panneau isolant en fibres de bois

(43) Veröffentlichungstag der Anmeldung: 28.10.2009
(73) Patentinhaber: DAW SE, 64372 Ober-Ramstadt (DE)
(72) Erfinder: Kuphal, Guido Dipl.-Ing., 64285 Darmstadt (DE); Berbner, Stefan Dipl.-Ing., 64658 Fürth / Odw. (DE); Chmielewski, Dietmar Dr., 40255 Düsseldorf (DE); Jost, Christoph Dipl.-Holzwrt., 64297 Darmstadt (DE)
(74) Vertreter: Pfenning, Meinig & Partner GbR

(56) Entgegenhaltungen:
- EP-A- 1 247 916
- DE-A1- 10 006 500
- DE-A1-102006 028 841
- DE-U1- 20 019 369
- DE-U1-202006 013 366

## Beschreibung

Die Erfindung betrifft eine Holzfaserdämmplatte zur Außendämmung von Gebäuden, wobei die Holzfaserdämmplatte einen Hybridaufbau besitzt. Derartige Platten sind aus DE 200 19 369 U und EP 1 247 916 bekannt. Die Holzfaserdämmplatte nach der Erfindung zeichnet sich besonders dadurch aus, dass einzelne Schichten miteinander verbunden werden und die äußere Deckschicht eine höhere Rohdichte besitzt wie die darunter liegenden Unterschichten.

Dämmplatten auf Holzbasis sind im Stand der Technik bekannt und stellen eine umweltfreundliche und natürliche Alternative zur herkömmlichen Dämmplatten aus Polymermaterialien wie z.B. EPS dar. Holzfaserdämmstoffe sind genormte, werkmäßig hergestellte Dämmstoffe für den Wärme- und Schallschutz. Sie bestehen zu mindestens 85% aus Holzfasern und werden im Nass- oder Trockenverfahren gegebenenfalls unter Hinzufügen von Binde- und/oder Zusatzmitteln hergestellt. Zur Herstellung werden dabei vor allem Nadelhölzer eingesetzt. Die Hauptvorzüge der Nadelhölzer sind ihre hohe Verfügbarkeit und die Faserqualität, die den fertigen Platten im Verhältnis zu Rohdichte eine hohe Festigkeit verleihen. Als Rohstoffsortimente werden dabei vor allem Resthölzer aus Sägewerken in Form Schwarten und Spreizen sowie Hackschnitzel verwendet.

Die Herstellung derartiger Platten kann im genannten Nassverfahren oder im Trockenverfahren erfolgen.

Bei der Herstellung von Holzfaserdämmplatten im Nassverfahren werden die holzeigenen Bindemittelkräfte benutzt, indem das Holz durch thermomechanische Verfahren zu Fasern aufgeschlossen und anschließend der Faserkuchen unter Hitze zum Abbinden gebracht wird. Durch diese Aufschlussprozesse wird die Faseroberfläche soweit aktiviert, dass beim Trocknen des Faserkuchens die holzeigenen Bindekräfte (Lignin) zusammen mit Wasser zur Bindung gebracht werden. Eine Beigabe von Klebstoffen ist für die Verbindung dann nicht mehr notwendig.

Im Gegensatz dazu ist bei der Herstellung von Holzfaserdämmstoffen im Trockenverfahren die Zugabe von Bindemittel erforderlich. Verfahrenstechnisch wird dabei so vorgegangen das Fasern direkt nach dem Aufschlussprozess auf die für den Beleimungsprozess notwendige Restfeuchte getrocknet und anschließend in einem Beleimkanal oder -turm mit dem Bindemittel in der Regel ca. 4% PUR-Harz beleimt werden. Die beleimten Fasern werden ausgestreut und auf die gewünschte Plattendicke gepresst und durch ein Dampfluftgemisch ausgehärtet.

Im Stand der Technik ist es nun grundsätzlich bekannt sowohl Holzfaserdämmplatten die nach dem Nassverfahren wie auch solche die nach dem Trockenverfahren hergestellt werden für die Außendämmung im Rahmen eines Wärmedämmverbundsystems (WDVS) zu verwenden.

Aus ökologischer Sicht ist es nun aber vorteilhaft wenn als Holzfaserdämmplatten solche eingesetzt werden, die nach dem Nassverfahren hergestellt werden, da diese im Wesentlichen frei von Bindemittel sind. Zur Realisierung eines Wärmedämmverbundsystems im Außenbereich mit Holzfaserdämmplatten ist es aber weiterhin wichtig, dass eine ausreichende Formstabilität zum Auftragen des Putzes vorhanden ist. Daher ist es erforderlich, dass sich im Bereich der Platte, wo die Putzbeschichtung stattfindet, ein möglichst hohe Rohdichte (möglichst > 170 kg/m³) vorhanden ist.

Damit ist aber verbunden, dass die Holzfaserdämmplatten, die nach dem Nassverfahren hergestellt wird, als solche eine entsprechend hohe Rohdichte aufweisen muss und damit ein hohes Gewicht besitzt, wenn sie homogen aufgebaut ist. Im Massivbau ist die praktische Verarbeitung derart schwerer Platten inklusive der Befestigung umständlich.

Ausgehend hiervon ist es deshalb die Aufgabe der vorliegenden Erfindung eine neue Holzfaserdämmplatte vorzuschlagen, die eine gegenüber dem Stand der Technik niedrigere Rohdichte aufweist und die gleichzeitig in ihrer Beschaffenheit so ausgebildet ist, dass ein sicheres und formstabiles Wärmedämmverbundsystem aufgebaut werden kann.

Die Aufgabe wird mit einer Holzfaserdämmplatte nach dem Merkmal des Patentanspruches 1 gelöst. Die Unteransprüche zeigen vorteilhafte Weiterbildungen auf.

Erfindungsgemäß wird somit nach Patentanspruch 1 eine Holzfaserdämmplatte vorgeschlagen, die aus mehreren einzelnen Schichten aufgebaut ist, wobei zu mindest die äußere Schicht, die als Deckschicht bezeichnet wird, eine gegenüber den darunter liegenden Schichten höhere Rohdichte besitzt. Durch einen derartigen Hybridaufbau wird nun erreicht, dass zum einen die äußere Deckschicht, die für den Aufbau eines Wärmedämmverbundsystems nötige Rohdichte besitzt und das gleichzeitig die Holzfaserdämmplatte als Ganze im Mittel eine gegenüber dem Stand der Technik niedrigere Rohdichte zeigt. Realisiert wir dies dadurch, dass die Holzfaserdämmplatte wie in Anspruch 1 beschrieben aufgebaut ist und die einzelnen Schichten miteinander verbunden bevorzugt verleimt sind. Die Herstellung der Schichten erfolgt dabei im Wassverfahren.

Gemäß der vorliegenden Erfindung wird nun vorgeschlagen, dass die Holzfaserdämmplatte nach der Erfindung mindestens eine im eingebauten Zustand nach außen weisenden Deckschicht aufweist, die eine Rohdichte > 170 kg/m³ bis zu 280 kg/m³ aufweist und die ferner mindestens eine weitere Unterschicht besitzt, deren Rohdichte im Bereich > 120 kg/m³ bis 200 kg/m³ beträgt. Die Bestimmung der Rohdichte erfolgt nach EN 1602. Wichtig dabei ist, dass die mindestens eine Deckschicht eine höhere Rohdichte als die mindestens eine Unterschicht aufweist.

Dadurch werden nun mehrere Vorteile vereint. Zum Einen weist die Holzfaserdämmplatte nach der Erfindung gegenüber den im Stand der Technik bekannten Holzfaserdämmplatten, die als WDVS-Platten im Holzbau eingesetzt und im Nassverfahren hergestellt werden, eine geringere Rohdichte auf, nämlich eine Rohdichte im Bereich von 120 kg/m³ bis 190 kg/m³, bevorzugt im Bereich von 140 kg/m³ bis 180 kg/m³ und gleichzeitig weist sie durch die Deckschicht eine so hohe Rohdichte auf, nämlich im Größenbereich von 170 bis 280 kg/m³, bevorzugt im Bereich von 190 bis 230 kg/m³, so dass auch außenseitig die nötige Festigkeit erreicht wird.

Die Rohdichte der Deckschicht liegt dabei besonders bevorzugt bei ca. 210 kg/m³.

Die unter der Deckschicht angeordneten Unterschichten besitzen dann eine Rohdichte von > 120 kg/m³ bis 200 kg/m³, bevorzugt von 130 kg/m³ bis 160 kg/m³, besonders bevorzugt von 140 kg/m³.

Bei der erfindungsgemäßen Holzfaserdämmplatte besitzen die Schichten, das heißt sowohl die mindestens eine Deckschicht wie auch die mindestens eine Unterschicht eine Schichtdicke von 10 bis 30 mm, bevorzugt von 15 bis 25 mm, besonders bevorzugt eine Dicke von ca. 20 mm. Diese einzelnen Schichten werden nun zu einem Verbund verbunden, bevorzugt mittels einer Klebeverbindung. Als gängige Klebeverbindung ist Polyvinylacetat-Leim (PVAC-Leim), Wasserglas und/oder Polyurethan-Leim (PU-Leim) zu nennen.

Es hat sich gezeigt, dass es besonders vorteilhaft ist, wenn die Holzfaserdämmplatte nach der Erfindung aus einer Deckschicht und zwei bis zehn Unterschichten gebildet ist. Die Anzahl, insbesondere der Unterschichten, wird nach dem jeweiligen Anwendungsfall und der anzustrebenden Gesamtdicke gewählt. Besonders geeignete Aufbauten weisen fünf Unterschichten mit jeweils 20 mm und eine Deckschicht mit ebenfalls 20 mm auf, so dass ein Gesamtaufbau von 120 mm erreicht wird. Die Anzahl der Schichten wie auch die jeweiligen Dicken hängen aber auch vom speziellen Anwendungsfall ab.

Die Holzfaserdämmplatte nach der Erfindung zeigt nun durch den erfindungsgemäßen Aufbau eine Wärmeleitfähigkeit, die zwischen 0,037 und 0,046 W/m² * K beträgt. Bevorzugt ist die Wärmeleitfähigkeit ca. 0,043 W/m² * K.

Eine weitere bevorzugte Ausführung der Erfindung schlägt vor, dass die jeweiligen Schichten noch durch Zusätze hydrophobiert werden. Günstigerweise ist dabei die Deckschicht so ausgerüstet, dass sie der Stufe WS 1,0 der kurzzeitigen Wasseraufnahme zugeordnet werden kann. Die kurzzeitige Wasseraufnahme wird nach EN 1609 bestimmt. In den Unterschichten ist es ausreichend, wenn diese so ausgebildet sind, dass sie der Stufe WS 2,0 zugeordnet werden können. Dadurch ist gewährleistet, dass zumindest die Außenschicht eine so hohe Hydrophobierung aufweist, dass auch für den praktischen Einsatz eine ausreichend hohe Wasserabweisung hergestellt wird. Ein weiterer Vorteil der Erfindung besteht somit noch darin, dass durch den schichtweisen Aufbau der zu der beschriebenen Hybridplatte führt, auch die Hydrophobierung unterschiedlich ausgestaltet werden kann, so dass hier ein ökologischer und auch ein preislicher Vorteil gegenüber den bisher bekannten Platten, die durchgängig dann hydrophobiert werden müssen, erreicht wird.

Die Erfindung betrifft weiterhin nach Patentanspruch 13 eine Holzfaserdämmplatte, die mit einem Untergrund fest verbunden ist und ein Wärmedämmverbundsystem bilden kann. Die Verbindung der Holzfaserdämmplatte erfolgt dabei vorzugsweise durch Klebung und Dübeln.

Als Untergrund kann hierbei Mauerwerk aber auch eine Holzkonstruktion dienen. Wesentlich ist dabei, dass die Holzfaserdämmplatte nach der Erfindung mindestens mit Dübeln oder anderen geeigneten Verbindungsmitteln mit dem Untergrund fest verbunden wird. Als Dübel haben sich dabei solche als geeignet erwiesen, die einen Dübelschaft und einen Dübelteller aufweisen.

Besonders vorteilhaft ist es nun, wenn bei der erfindungsgemäßen Holzfaserdämmplatte zur Befestigung auf dem Untergrund in der Deckschicht Einschnitte hergestellt werden, in die dann der Dübelteller versenkt wird. Die Herstellung dieser Einschnitte kann mit bekannten Dübelbohrungen realisiert werden. Diese Einschnitte werden mit entsprechenden Pfropfen so verschlossen, dass eine bündige Oberfläche entsteht. Dadurch wird ein sicherer Halt der Holzfaserdämmplatte auf dem Untergrund hergestellt und gleichzeitig eine geschlossene Oberfläche erreicht, die die entsprechend hohe Rohdichte besitzt.

Die Erfindung wird nachfolgend anhand von Figuren näher erläutert, ohne jedoch den Gegenstand der vorliegenden Erfindung zu beschränken.
- Figur 1: zeigt im Schnitt eine erfindungsgemäße Holzfaserdämmplatte aus fünf Unterschichten und einer Deckschicht
- Figur 2: zeigt die Platte nach Figur 1 als Bestandteil eines Wärmedämmverbundsystems
- Figur 3: zeigt die Befestigung der erfindungsgemäßen Holzfaserdämmplatte mittels Dübel auf dem Untergrund.
- Figur 4: Zusammenstellung der Messergebnisse

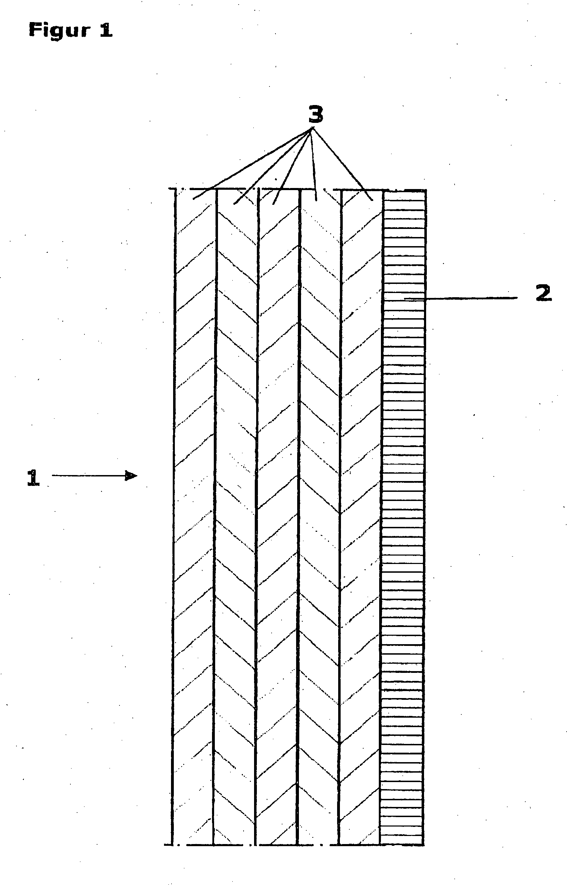

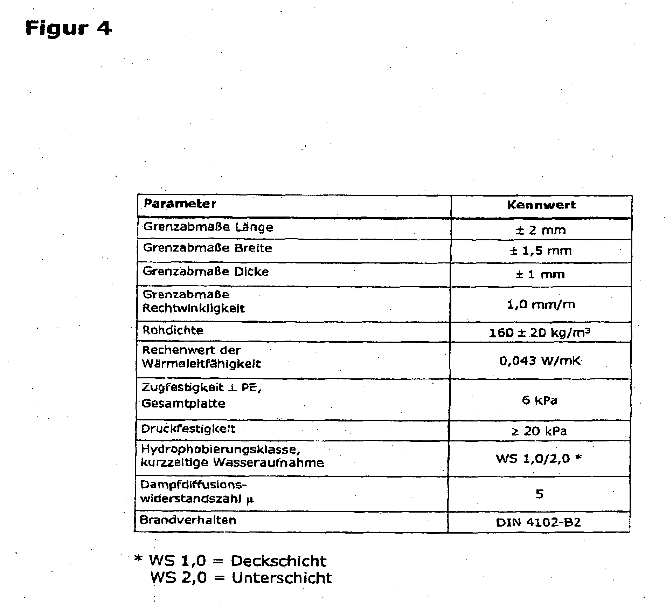

Figur 1 zeigt nun im Schnitt den schichtweisen Aufbau einer erfindungsgemäßen Holzfaserdämmplatte 1. Die Holzfaserdämmplatte 1 nach der Ausführungsform die in Figur 1 dargestellt ist, besteht aus einer Deckschicht 2 sowie fünf Unterschichten 3. Im Beispielsfall nach Figur 1 beträgt die Schichtdicke der Deckschicht 2 20 mm (waagerecht schraffiert) und die weiteren Unterschichten 3 (schräg schraffiert) besitzen eine Dicke von ebenfalls 20 mm. Die Rohdichte der Deckschicht 2, die mittels des Nassverfahrens hergestellt worden ist, beträgt im Beispielsfall ca. 210 kg/m³. Die Deckschicht 2 ist dabei so ausgerüstet, dass sie der Stufe WS 1,0 der kurzzeitigen Wasseraufnahme unterfällt. Die Unterschichten 3 besitzen in der Ausführungsform nach Figur 1 eine Rohdichte von ca. 140 kg/m³ und entsprechen der WS 2,0. Der in Figur 1 dargestellte Hybridaufbau der erfindungsgemäßen Holzfaserdämmplatte weist eine Wärmeleitfähigkeit auf, die bei ca. 0,043 W/m² * K liegt. Die Rohdichte der gesamten Platte beträgt ca. 160 kg/m³. Die technischen Daten der Platte, wie sie in Figur 1 dargestellt ist, sind in Figur 4 wiedergegeben. Besonders ist in diesem Zusammenhang darauf hinzuweisen, dass die Platte insgesamt nicht nur eine niedrige Rohdichte aufweist, sondern dass gleichzeitig noch eine ausreichende Zugfestigkeit der Gesamtplatte und eine Druckfestigkeit > 20 kPa erreicht wird.

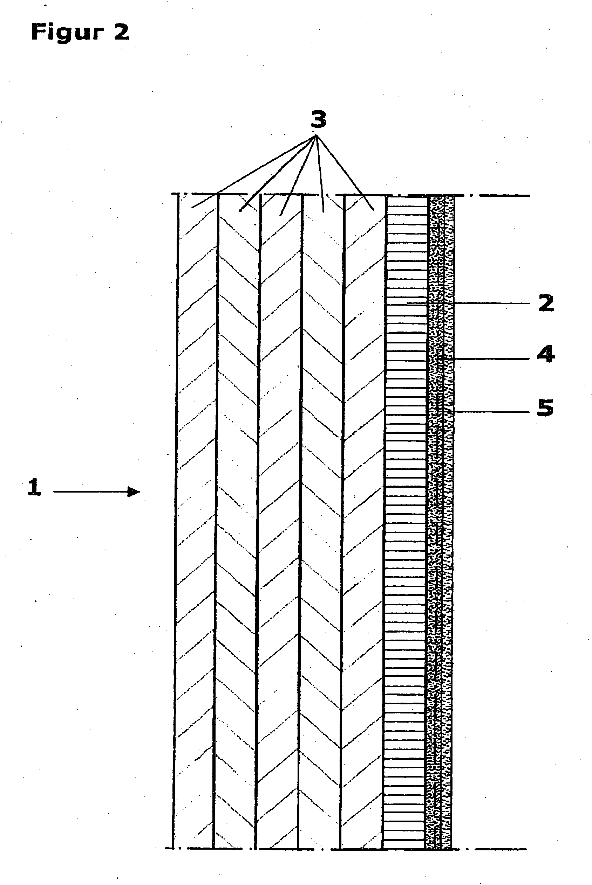

Figur 2 zeigt nun die Platte, wie sie in Figur 1 dargestellt ist, jedoch ist bei der Ausführungsform nach Figur 2 auf die Deckschicht 2 noch eine Klebe- und Armierungsmasse 4 in einer Schichtdicke von ca. 5 bis 7 mm aufgebracht. In dieser Klebe- und Armierungsmasse ist noch ein Armierungsgewebe (was durch die Strichelung dargestellt ist) eingelegt. Zur Bildung eines Putzsystems ist dann auf der Armierungs- und Klebemasse 4 eine Putzschicht 5 aufgebracht. Diese Putzschicht 5 kann zum Beispiel ein Silikonharzputz, alternativ auch ein Mineralputz sein. Die Schichtstärke wird je nach Körung ausgewählt.

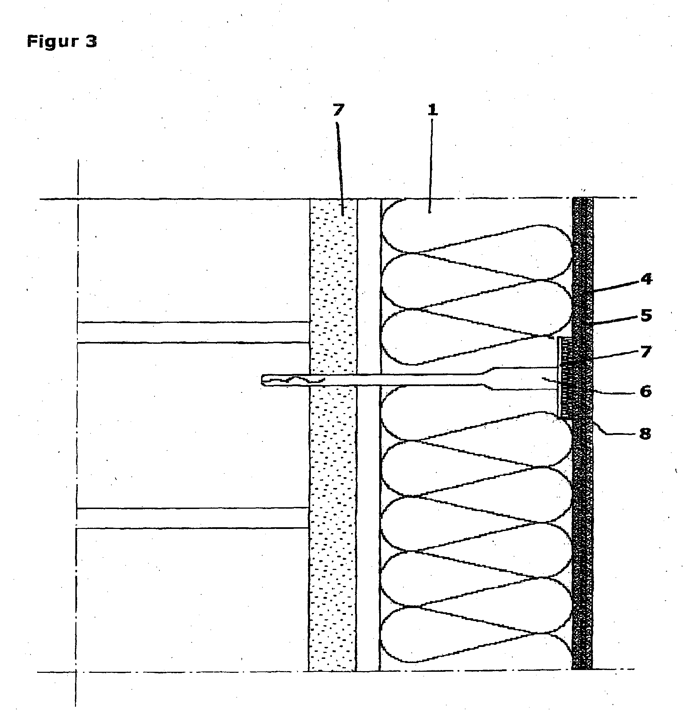

Figur 3 zeigt nun den Einsatz der erfindungsgemäßen Holzfaserdämmplatte 1 in einem Wärmedämmverbundsystem und die Befestigung der Holzfaserdämmplatte mit einem Dübel 6. Bei der Figur 3 ist dabei der Schichtaufbau der Holzfaserdämmplatte nicht gezeigt. Der Dübel 6 ist mit seinem Dübelteller 7 in der Deckschicht versenkt.

Figur 3 zeigt dann, wie die Deckschicht durch einen Pfropfen 8 verschlossen ist. Der Pfropfen 8 stellt einen bündigen Abschluss der Deckschicht dar und ist ebenfalls aus dem gleichen Material gefertigt. Insoweit kann eine ebene Außenfläche hergestellt werden, die dann mittels des Armierungsputzes 4 und des Oberputzes 5 verschlossen wird.

## Patentansprüche

1. Holzfaserdämmplatte (1) zur Außendämmung aus mindestens zwei miteinander verklebten Schichten,
**dadurch gekennzeichnet,**
**dass** die Holzfaserdämmplatte mindestens eine, im eingebauten Zustand nach außen weisende Deckschicht (2) und mindestens eine weitere mit der Deckschicht (2) verbundenen Unterschicht (3) aufweist, wobei die Schichten (2,3) jeweils eine Dicke von 10 bis 30 mm aufweisen und die mindestens eine Deckschicht (2), eine Rohdichte von > 170 kg/m³ bis 280 kg/m³ und die mindestens eine weitere Unterschicht (3), eine Rohdichte von > 120 kg/m³ bis 200 kg/m³ besitzt, mit der Maßgabe, dass die mindestens eine Deckschicht (2) eine höhere Rohdichte als die mindestens eine Unterschicht (3) aufweist, wobei die mindestens eine Deckschicht (2) und/oder die mindestens eine Unterschicht (3) im Wesentlichen bindemittelfrei mittels des Nassverfahrens hergestellt worden ist.

2. Holzfaserdämmplatte nach Anspruch 1,
**dadurch gekennzeichnet,**
**dass** die Rohdichte der mindestens einen Deckschicht (2) 190 kg/m³ bis 230 kg/m³, bevorzugt ca. 210 kg/m³ beträgt.

3. Holzfaserdämmplatte nach Anspruch 1 oder 2,
**dadurch gekennzeichnet,**
**dass** die Rohdichte der mindestens einen weiteren Unterschicht (3) 130 kg/m³ bis 160 kg/m³, bevorzugt ca. 140 kg/m³ beträgt.

4. Holzfaserdämmplatte nach mindestens einem der Ansprüche 1 bis 3,
**dadurch gekennzeichnet,**
**dass** die Dicke der Schichten (2,3) 15 bis 25 mm, bevorzugt ca. 20 mm beträgt.

5. Holzfaserdämmplatte nach mindestens einem der Ansprüche 1 bis 4,
**dadurch gekennzeichnet,**
**dass** die Rohdichte der Holzfaserdämmplatte (1) 120 kg/m³ bis 190 kg/m³, bevorzugt 140 kg/m³ bis 180 kg/m³ beträgt.

6. Holzfaserdämmplatte nach mindestens einem der Ansprüche 1 bis 5,
**dadurch *gekennzeichnet,***
**dass** die Wärmeleitfähigkeit der Holzfaserdämmplatte (1) zwischen 0,037 und 0,046 W/m² * K beträgt.

7. Holzfaserdämmplatte nach Anspruch 6,
**dadurch gekennzeichnet,**
**dass** die Wärmeleitfähigkeit ca. 0,043 W/m² * K beträgt.

8. Holzfaserdämmplatte nach mindestens einem der Ansprüche 1 bis 7,
**dadurch gekennzeichnet,**
**dass** die mindestens eine Deckschicht (2) so ausgerüstet ist, dass sie der kurzzeitigen Wasseraufnahme WS 1,0 zugeordnet werden kann.

9. Holzfaserdämmplatte nach mindestens einem der Ansprüche 1 bis 8,
**dadurch gekennzeichnet,**
**dass** die mindestens eine weitere Unterschicht (3) so ausgerüstet ist, dass sie der kurzzeitigen Wasseraufnahme WS 2,0 zugeordnet werden kann.

10. Holzfaserdämmplatte nach mindestens einem der Ansprüche 1 bis 9,
**dadurch gekennzeichnet,**
**dass** sie aus einer Deckschicht (2) und 2 bis 10 Unterschichten (3) gebildet ist.

11. Holzfaserdämmplatte nach mindestens einem der Ansprüche 1 bis 10,
**dadurch gekennzeichnet,**
**dass** die Holzfaserdämmplatte (1) fest mit einem Untergrund (7) verbunden ist und zur Bildung eines Wärmedämmverbundsystems(WDVS) auf seiner nach außen weisenden Deckschicht (2) eine Armierung (4) und eine Putzschicht (5) aufweist.

12. Holzfaserdämmplatte nach Anspruch 11,
**dadurch gekennzeichnet,**
**dass** die Holzfaserdämmplatte (1) durch Klebung und/oder Dübeln fest mit dem Untergrund (7) verbunden ist.

13. Holzfaserdämmplatte nach Anspruch 12,
**dadurch gekennzeichnet,**
**dass** der Dübel (6) aus einem Dübelschaft und einem Dübelteller (7) gebildet ist.

14. Holzfaserdämmplatte nach Anspruch 13,
**dadurch gekennzeichnet,**
**dass** in die Deckschicht (2) der Holzfaserdämmplatte (1) Einschnitte angefräst werden können, die so dimensioniert sind, dass der Dübelteller (7) in dem Einschnitt versenkbar ist.

15. Holzfaserdämmplatte nach Anspruch 14,
**dadurch gekennzeichnet,**
**dass** die Einschnitte durch Stopfen (8) aus dem Material der Deckschicht (1) so verschlossen sind, dass eine nahezu bündige äußere Oberfläche der Deckschicht (2) entsteht.

16. Verwendung einer Holzfaserdämmplatte nach mindestens einem der Ansprüche 1 bis 11 zur Außendämmung in einem Wärmedämmverbundsystem (WDVS).

## Claims

1. A wood fibre insulating board (1) for external insulation, consisting of at least two layers glued together, **characterised in that** the wood fibre insulating board has at least one cover layer (2) which in the installed state faces outwards, and at least one further lower layer (3) which is joined to the cover layer (2), the layers (2, 3) each having a thickness of 10 to 30 mm and the at least one cover layer (2) having a density of > 170 kg/m³ to 280 kg/m³, and the at least one further lower layer (3) having a density of > 120 kg/m³ to 200 kg/m³, with the proviso that the at least one cover layer (2) has a higher density than the at least one lower layer (3), with the at least one cover layer (2) and/or the at least one lower layer (3) having been produced substantially without binder by means of the wet method.

2. A wood fibre insulating board according to Claim 1, **characterised in that** the density of the at least one cover layer (2) is 190 kg/m³ to 230 kg/m³, preferably approx. 210 kg/m³.

3. A wood fibre insulating board according to Claim 1 or 2, **characterised in that** the density of the at least one further lower layer (3) is 130 kg/m³ to 160 kg/m³, preferably approx. 140 kg/m³.

4. A wood fibre insulating board according to at least one of Claims 1 to 3, **characterised in that** the thickness of the layers (2, 3) is 15 to 25 mm, preferably approx. 20 mm.

5. A wood fibre insulating board according to at least one of Claims 1 to 4, **characterised in that** the density of the wood fibre insulating board (1) is 120 kg/m³ to 190 kg/m³, preferably 140 kg/m³ to 180 kg/m³.

6. A wood fibre insulating board according to at least one of Claims 1 to 5, **characterised in that** the thermal conductivity of the wood fibre insulating board (1) is between 0.037 and 0.046 W/m² . K.

7. A wood fibre insulating board according to Claim 6, **characterised in that** the thermal conductivity is approx. 0.043 W/m² · K.

8. A wood fibre insulating board according to at least one of Claims 1 to 7, **characterised in that** the at least one cover layer (2) is finished such that it can be classified as belonging to short-term water absorption WS 1.0.

9. A wood fibre insulating board according to at least one of Claims 1 to 8, **characterised in that** the at least one further lower layer (3) is finished such that it can be classified as belonging to short-term water absorption WS 2.0.

10. A wood fibre insulating board according to at least one of Claims 1 to 9, **characterised in that** it is formed from a cover layer (2) and 2 to 10 lower layers (3).

11. A wood fibre insulating board according to at least one of Claims 1 to 10, **characterised in that** the wood fibre insulating board (1) is joined securely to a base (7) and for forming a composite thermal insulation system (CTIS) has on its outwards-facing cover layer (2) a reinforcement (4) and a rendering coat (5).

12. A wood fibre insulating board according to Claim 11, **characterised in that** the wood fibre insulating board (1) is joined securely to the base (7) by gluing and/or anchoring.

13. A wood fibre insulating board according to Claim 12, **characterised in that** the anchor (6) is formed from an anchor shank and an anchor disc (7).

14. A wood fibre insulating board according to Claim 13, **characterised in that** incisions can be milled a short way into the cover layer (2) of the wood fibre insulating board (1), which incisions are of such dimensions that the anchor disc (7) can be countersunk into the incision.

15. A wood fibre insulating board according to Claim 14, **characterised in that** the incisions are closed by plugs (8) made of the material of the cover layer (1) in such a way that a virtually flush outer surface of the cover layer (2) is produced.

16. Use of a wood fibre insulating board according to at least one of Claims 1 to 11 for external insulation in a composite thermal insulation system (CTIS).

## Revendications

1. Panneau isolant en fibres de bois (1) pour l'isolation externe, constitué d'au moins deux couches collées entre elles, **caractérisé en ce que** le panneau isolant en fibre de bois comprend au moins une couche de couverture (2) orientée, à l'état monté, vers l'extérieur et au moins une autre couche inférieure (3) reliée à la couche de couverture (2), les couches (2, 3) présentant chacune une épaisseur de 10 à 30 mm et l'au moins une couche de couverture (2) présentant une densité apparente > 170 kg/m³ et pouvant aller jusqu'à 280 kg/m³ et l'au moins autre couche inférieure (3) une densité apparente > 120 kg/m³ et pouvant aller jusqu'à 200 kg/m³, avec comme condition que l'au moins une couche de couverture (2) présente une densité apparente supérieure à celle de l'au moins une couche inférieure (3), l'au moins une couche de couverture (2) et/ou l'au moins une couche inférieure (3) ayant été fabriquées sensiblement sans liant à l'aide du procédé par voie humide.

2. Panneau isolant en fibres de bois selon la revendication 1, **caractérisé en ce que** la densité apparente de l'au moins une couche de couverture (2) est de 190 kg/m³ à 250 kg/m³, de préférence d'environ 210 kg/m³.

3. Panneau isolant en fibres de bois selon la revendication 1 ou 2, **caractérisé en ce que** la densité apparente de l'au moins autre couche inférieure (3) est de 130 kg/m³ à 160 kg/m³, de préférence d'environ 140 kg/m³.

4. Panneau isolant en fibres de bois selon au moins une des revendications 1 à 3, **caractérisé en ce que** l'épaisseur des couches (2, 3) est de 15 à 25 mm, de préférence d'environ 20 mm.

5. Panneau isolant en fibres de bois selon au moins une des revendications 1 à 4, **caractérisé en ce que** la densité apparente du panneau isolant en fibres de bois (1) est de 120 kg/m³ à 190 kg/m³, de préférence de 140 kg/m³ à 180 kg/m³.

6. Panneau isolant en fibres de bois selon au moins une des revendications 1 à 5, **caractérisé en ce que** la conductivité thermique du panneau isolant en fibres de bois (1) se situe entre 0,037 et 0,046 W/m^{2*}K.

7. Panneau isolant en fibres de bois selon la revendication 6, **caractérisé en ce que** la conductivité thermique est d'environ 0,043 W/m^{2*}K.

8. Panneau isolant en fibres de bois selon au moins une des revendications 1 à 7, **caractérisé en ce que** l'au moins une couche de couverture (2) est conçue de façon à présenter un coefficient d'absorption d'eau à court terme WS de 1,0.

9. Panneau isolant en fibres de bois selon au moins une des revendications 1 à 8, **caractérisé en ce que** l'au moins une autre couche inférieure (3) est conçue de façon à présenter un coefficient d'absorption d'eau à court terme WS de 2,0.

10. Panneau isolant en fibres de bois selon au moins une des revendications 1 à 9, **caractérisé en ce qu'**il est constitué d'une couche de couverture (2) et de 2 à 10 couches inférieures (3).

11. Panneau isolant en fibres de bois selon au moins une des revendications 1 à 9, **caractérisé en ce que** le panneau isolant en fibres de bois (1) est relié fermement à une base (7) et, pour la formation d'un système composite d'isolation thermique, comprend, sur sa couche de couverture (2) orientée vers l'extérieur, une armature (4) et une couche d'enduit (5).

12. Panneau isolant en fibres de bois selon la revendication 11, **caractérisé en ce que** le panneau isolant en fibres de bois (1) est fermement relié à la base (7) par collage et/ou à l'aide de chevilles.

13. Panneau isolant en fibres de bois selon la revendication 12, **caractérisé en ce que** la cheville (6) est constituée d'un fût de cheville et d'un plateau de cheville (7).

14. Panneau isolant en fibres de bois selon la revendication 13, **caractérisé en ce que**, dans la couche de couverture (2) du panneau isolant en fibres de bois (1), des découpes peuvent être réalisées, avec des dimensions permettant de noyer le plateau de cheville (7) dans la découpe.

15. Panneau isolant en fibres de bois selon la revendication 14, **caractérisé en ce que** les découpes sont fermées par des bouchons (8) constitué du matériau de la couche de couverture (1), de façon à ce qu'il en résulte une surface extérieure presque en affleurement de la couche de couverture (2).

16. Utilisation d'un panneau isolant en fibres de bois selon au moins une des revendications 1 à 11 pour l'isolation extérieure dans un système composite d'isolation thermique (SCIT).
